# EUROPÄISCHE PATENTSCHRIFT

(11) **EP 1 949 525 B1**
(45) Veröffentlichungstag und Bekanntmachung des Hinweises auf die Patenterteilung: **05.06.2013**
(21) Anmeldenummer: 06806352.8
(22) Anmeldetag: 18.10.2006
(51) Int. Cl.: H02K 9/06, H02K 11/00

(54) **ELEKTROMOTOR**
ELECTRIC MOTOR
MOTEUR ELECTRIQUE

(30) Priorität: 11.11.2005 DE 102005054251
(43) Veröffentlichungstag der Anmeldung: 30.07.2008
(73) Patentinhaber: SEW-EURODRIVE GmbH & Co. KG, 76646 Bruchsal (DE)
(72) Erfinder: PFANN, Jochen, 76189 Karlsruhe (DE); STANEK, Klaus, 76694 Forst (DE)
(86) Internationale Anmeldenummer: PCT/EP2006/010031
(87) Internationale Veröffentlichungsnummer: WO 2007/054186

(56) Entgegenhaltungen:
- EP-A- 0 192 469
- EP-A- 0 874 442
- EP-A1- 0 697 759
- DE-A1- 3 910 498
- DE-A1- 10 243 273
- DE-A1- 19 634 692
- DE-A1-102004 036 281
- JP-A- 60 176 439

## Beschreibung

Die Erfindung betrifft einen Elektromotor.

Aus der DE 199 24 201 C2 ist ein Winkelerfassungssystem gezeigt, bei dem die Sensoren am Umfang angeordnet sind, so dass in radialer Richtung sehr viel Bauraum benötigt wird. An den herausstehenden Impulsgebern können bei Transport des Motors Schäden auftreten oder vorbeibewegende Objekte oder Personen kollidieren. Außerdem sind die Impulsgeber in ihrer relativen Position zueinander nur über die Lüfterhaube festlegbar ist.

**Aus der** DE 102 43 273 A1 **ist ein Elektromotor mit Lüfter und zugehörigem Lüfterrad bekannt, wobei eine Lüfterhaube den Lüfter zumindest teilweise umgibt, wobei vom Lüfter ein Signalgeber gehalten ist.**

**Aus der** JP 60 176439 A **ist ein Elektromotor bekannt, bei dem der Lüfter ein Loch aufweist zur Bestimmung der Winkelposition und zur kompakten Ausführung des Motors.**

**Aus der** EP 0 192 469 A1 **ist ein Elektromotor bekannt, bei dem der Lüfter eine optisch codierte Scheibe aufweist.**

Der Erfindung liegt daher die Aufgabe zugrunde, einen Elektromotor weiterzubilden, wobei er kompakter und kostengünstiger ausgeführt sein soll.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass er einen Lüfter mit Lüfterrad umfasst, das von einer Lüfterhaube zumindest teilweise umgeben ist, **das Lüfterrad mit einer Rotorwelle des Elektromotors verbunden ist,**
**wobei das Lüfterrad an seinem einen axialen Endbereich mit einer Signalscheibe verbunden ist, die mit Sensoren eines Moduls zusammenwirken, das an der Lüfterhaube vorgesehen ist,**
**wobei die Sensoren axial hinter der Signalscheibe angeordnet sind,**
**wobei die Signalscheibe aus metallischem Material, Insbesondere Blech, gefertigt ist oder zumindest metallische Partikel umfasst,**
**wobei die Signalscheibe in axialer Richtung kraftschlüssig und zusätzlich in Umfangsrichtung formschlüssig mit dem Lüfterrad verbunden ist,**
**wobei das Modul Sensoren und ein mit der Lüfterhaube lösbar verbindbares Elektronikgehäuse (6) aufweist,**
**wobei das Modul drei Positionen zur Aufnahme der Sensoren umfasst,**
**wobei die Sensoren nur an zwei der drei Positionen vorgesehen sind.**

Von Vorteil ist dabei, dass er kompakter ist, da die Sensoren im Modul integriert ausgebildet sind. Außerdem ist der relative Abstand der Sensoren über das Modul festgelegt und somit eine Fehlerquelle beseitigt. Darüber hinaus steht in radialer Richtung nun kein Teil hervor. Die etwas größere Baulänge ist nur ein kleiner Nachteil. Beschädigungen oder Kollisionen bei axial angeschraubtem Modul treten nur in geringem Maße oder gar nicht auf. Insbesondere ist das Modul gehäusebildend und schützt die integrierten Sensoren.

Des Weiteren ist vorteilhafterweise die Funktion der Signalscheibe getrennt von der Funktion des Lüfterrades. Somit ist das Trägheitsmoment reduzierbar durch die Wahl geeigneten Materials bei dem Lüfterrad reduzierbar. Trotzdem kann die Signalscheibe aus Metall oder magnetisierbarem Material gewählt werden.

Außerdem ist die Signalscheibe einfach und schnell durch eine Signalscheibe mit einer anderen Anzahl von Stegen ersetzbar. Somit ist innerhalb einer Baureihe von Elektromotoren eine hohe Varianz an Elektromotoren herstellbar, wobei nur wenige verschiedene Teile benötigt werden. Denn es ist nur die Signalscheibe in verschiedenen Ausführungen zu bevorraten, um Elektromotoren mit verschiedener Winkelauflösung bereitzustellen. Wenn also nur eine Varianz in der Signalscheibe vorhanden ist, insbesondere in der Anzahl der Impulse, welche bei einer Umdrehung abgebbar sind, ist somit ein jeweiliger Elektromotor herstellbar, der jeweils verschiedene Winkelauflösungen aufweist.

**Erfindungsgemäß** ist die Signalscheibe aus metallischem Material, insbesondere Blech, gefertigt oder umfasst zumindest metallische Partikel. Von Vorteil ist dabei, dass die Funktion des Signalgebers in Form der Signalscheibe realisierbar ist und trotzdem das Trägheitsmoment gering ausführbar ist.

Bei einer vorteilhaften Ausgestaltung ist das Lüfterrad aus Kunststoff gefertigt, insbesondere als Spritzgussteil. Von Vorteil ist dabei, dass die Herstellung einfach und schnell ausführbar ist und das Trägheitsmoment gering ausführbar ist. Somit ist die Dynamik bei Servo- und Positionieranwendungen besonders hoch.

**Erfindungsgemäß** ist das Lüfterrad mit der Rotorwelle verbunden. Insbesondere verbessert der vom Lüfter erzeugte Kühlluftstrom die Wärmeabfuhr des Elektromotors an die Umgebung. Von Vorteil ist dabei, dass der Kühlluftstrom abhängig von der Drehzahl des Motors erzeugt wird. Somit wird viel Kühlleistung erzeugt, wenn der Motor eine hohe Leistung aufweist und umgekehrt. Der Lüfter verbraucht keine Leistung, wenn die Drehzahl verschwindet.

**Erfindungsgemäß** ist die Signalscheibe in Umfangsrichtung formschlüssig und in axialer Richtung kraftschlüssig mit dem Lüfterrad verbunden. Von Vorteil ist dabei, dass die Verbindung durch einfache Schlitze an der Signalscheibe und am Lüfterrad hervorstehende, sich verbreiternde Zapfen herstellbar ist.

**Erfindungsgemäß** weist das Modul Sensoren und ein mit der Lüfterhaube lösbar verbindbares Elektronikgehäuse auf. Von Vorteil ist dabei, dass der relative Abstand zwischen den Sensoren festlegbar ist und schützbar ist mittels des Moduls.

Bei einer vorteilhaften Ausgestaltung sind die Sensoren in Umfangsrichtung mit einem Versatz von jeweils 90° elektrisch angeordnet. Dies ist beispielsweise von Vorteil, wenn die Impulszahl der Signalscheibe 1 ist, also pro Umdrehung nur eine Ausnehmung detektierbar ist. Von Vorteil Ist dabei, dass zwei Signale mit einer 90° Phasenverschiebung erzeugbar sind und somit eine Drehrichtungskennung realisierbar ist.

Erfindungsgemäß umfasst das Modul drei Positionen zur Aufnahme von Sensoren. Von Vorteil ist dabei, dass zwei der drei Positionen auswählbar sind. sind also nur diese zwei bestückt.

Es sind also nur an zwei der drei Positionen Sensoren vorgesehen.

Bei einer vorteilhaften Ausgestaltung umfasst das Modul ein Steckverbinderteil. Von Vorteil ist dabei, dass ein Buskabel mit entsprechendem Gegensteckverbinderteil verbindbar ist.

Bei einer alternativen vorteilhaften Ausgestaltung umfasst das Modul kein Steckverbinderteil sondern ist mit Kable direkt verbindbar in den Innenbereich des Anschlusskastens des Elektromotors.

Bei einer vorteilhaften Ausgestaltung ist das Modul als Busteilnehmer ausgeführt. Von Vorteil ist dabei, dass die Auswertelektronik und die Busteilnehmerelektronik mit Adresse schon im Modul vorgesehen ist und somit der Antrieb mit Elektromotor fähig ist, mit einem Bussystem verbunden zu werden. Die Daten sind dann mit weiteren Teilnehmern, wie einem den Elektromotor versorgenden Umrichter, dezentrale Steuerung, Zentralrechner, SPS und dergleichen austauschbar. Insbesondere ist die Drehzahl diesen Teilnehmern zum Steuern und/oder Regeln zuführbar.

Bei einer vorteilhaften Ausgestaltung ist der Arbeitsbereich der Sensoren größer als die Fertigungstoleranzen der Lüfterhaube und des Lüfterrades. Vorteiligerweise ist somit ein mechanisches Einstellen nicht notwendig und es sind zugehörige Verstellmittel überflüssig. Denn das Modul wird einfach an die Lüfterhaube verbunden und der zulässige Arbeitsbereich überdeckt mehr als die genannten Toleranzen, die beim Fertigen des Lüfterrades und der Lüfterhaube entstehen, sowie weitere, die beim Zusammenbau des Elektromotors entstehen. Vorteil ist auch, dass für Lüfterrad und Lüfterhaube Kunststoffteile trotz deren großer Toleranz verwendbar sind.

Weitere Vorteile ergeben sich aus den Unteransprüchen.

### Bezugszeichenliste

| | |
|---|---|
| 1 | Ausnehmung der Signalscheibe |
| 2 | Blechbereiche der Signalscheibe |
| 3 | Lüfterflügel |
| 4 | Lüfterrad |
| 5 | Lüfterhaube |
| 6 | Elektronikgehäuse |
| 7 | Steckverbinder |
| 8 | Labyrinth-Dichtung |
| 9 | Motorgehäuseteil |
| 10 | Lager |
| 20 | Zapfen |
| 30 | Sensor |
| 31 | Befestigungsbereiche |

Die Erfindung wird nun anhand von Abbildungen näher erläutert:

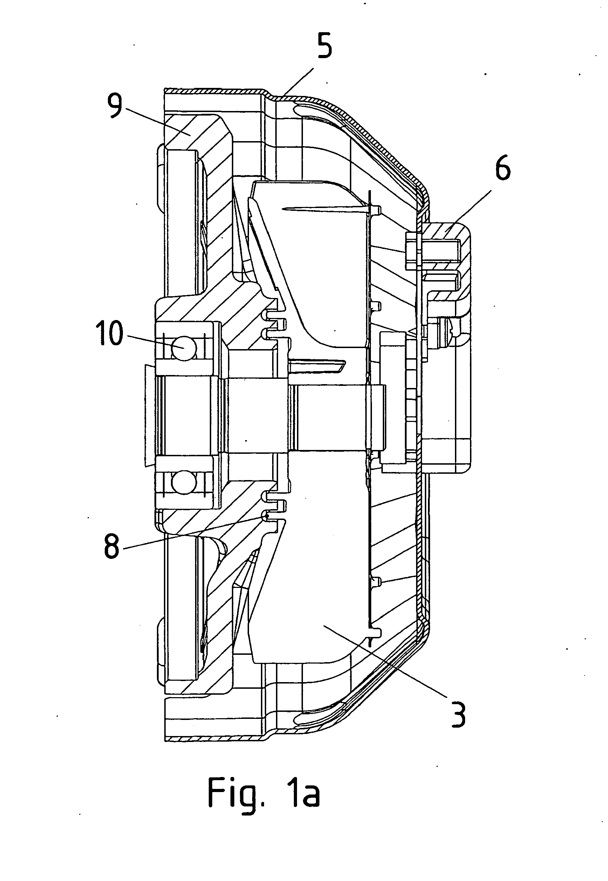

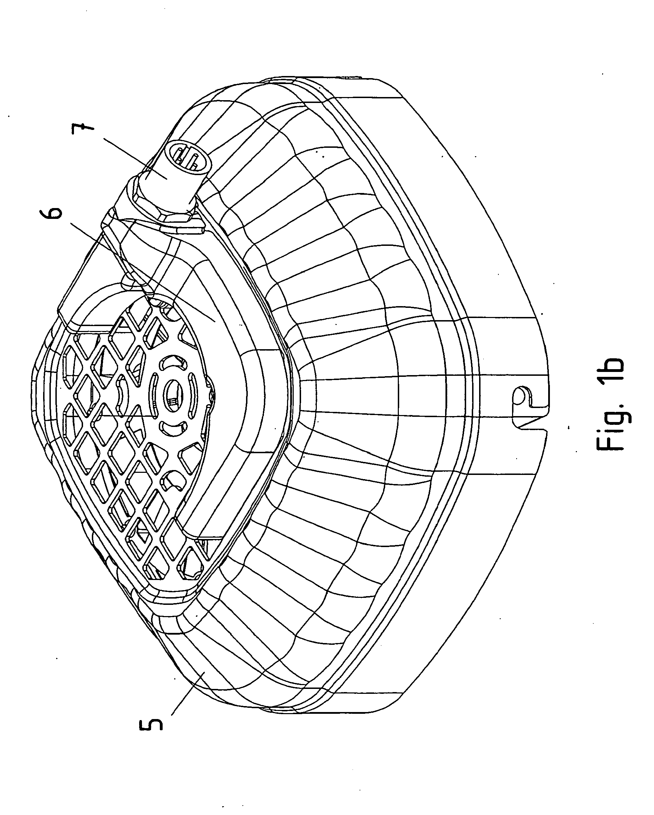

In der Figur 1 a ist ein axialer Endbereich eines erfindungsgemäßen Elektromotors mit Lüfter in Schnittansicht gezeichnet.
In Figur 1b ist eine Schrägansicht auf diesen Bereich gezeigt.

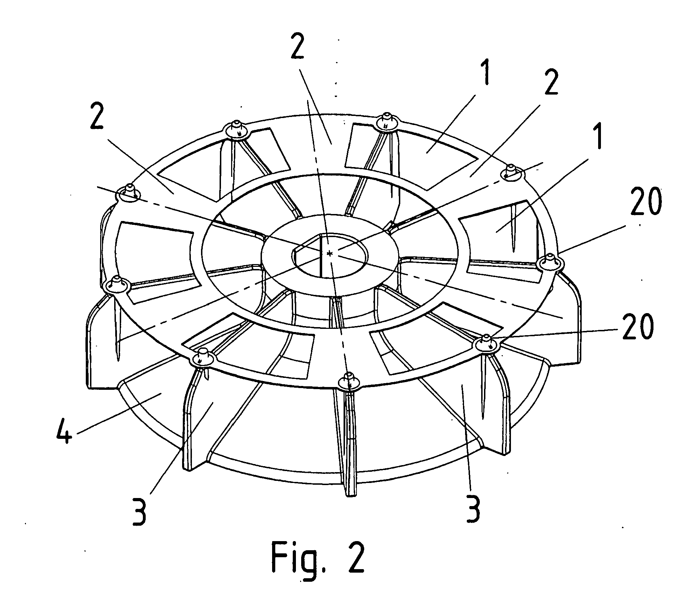

In Figur 2 ist das Lüfterrad des Lüfters gezeigt.
In Figur 3 Ist das Elektronikgehäuse 6 gezeigt, das an der Lüfterhaube 5 anbringbar ist.

Am Lüfterflügel 3 umfassenden Lüfterrad 4 ist eine Signalscheibe vorgesehen, die in Umfangsrichtung aufeinander folgende Bereiche von Ausnehmungen 1 und Material aufweist. Die Materialbereiche sind beispielhaft Blechbereiche 2 der Signalscheibe.

Die Bereiche sind derart angeordnet, dass axial hinter der Signalscheibe angeordnete Sensoren diese beim Drehen der Signalscheibe abwechselnde Reihenfolge detektieren können.

Die Sensoren 30 sind an der Lüfterhaube 5 anbringbar. Hierzu sind die Sensoren 30 in einem Elektronikgehäuse 6 vorgesehen, das mit Mitteln zur lösbaren Verbindung an den Befestigungsbereichen 31 verbunden ist. Hierzu sind vorteiligerweise Schrauben verwendbar. Am Elektronikgehäuse 6 ist ein Steckverbinder 7 vorgesehen, der zum Anschließen eines entsprechenden Gegensteckverbinders geeignet ist. Vorzugsweise ist hierbei ein Feldbusanschluss derart realisiert, dass das Elektronikgehäuse als Busteilnehmer vorsehbar ist. Hierzu ist das Elektronikgehäuse derart ausgeführt, dass es zusätzlich zu den Sensoren auch noch eine elektronische Schaltung umfasst, der eine Adresse als Busteilnehmer zuordenbar ist.

Das Lüfterrad ist mittels einer Labyrinth-Dichtung 8 zum Motorgehäusetell 9 des Elektromotors hin abgedichtet. Das Lüfterrad ist mit der über die Lager 10 am Gehäuseteil 9 gelagerten Rotorwelle verbunden und somit von dieser angetrieben. Der vom Lüfterrad angetriebene Kühlluftstrom dient zur Kühlung des Elektromotors.

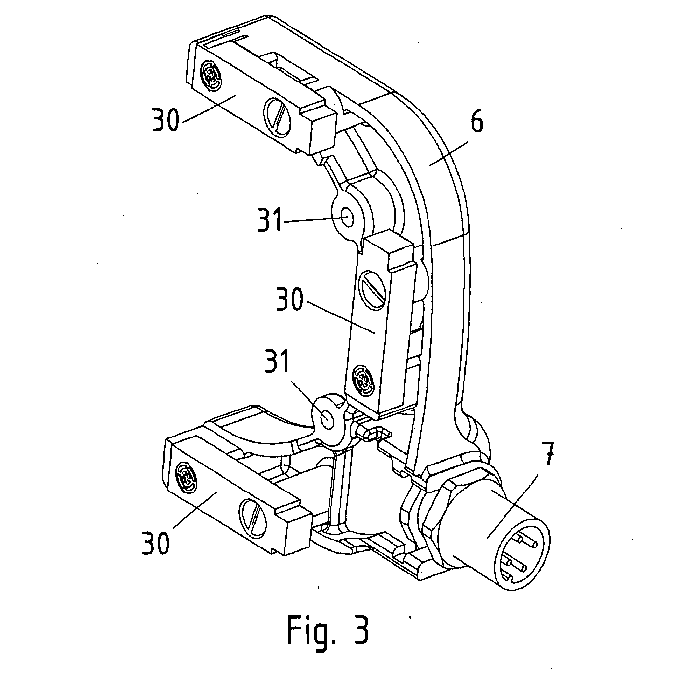

Innerhalb der Elektronikgehäuses 6 sind in Figur 3 drei Sensoren 30 sichtbar angeordnet. **Erfindungsgemäß sind** jedoch nur zwei der drei Sensoren 30 **vorgesehen.** Dabei sind vorteiligerweise die beiden Sensoren ausgewählt, welche derart mit der Signalscheibe zusammenwirken, dass, wenn der erste der beiden sich über der Mitte eines Steges befindet, sich der zweite den Beginn eines Steges zu erkennen beginnt.

Auf diese Weise entstehen bei der Drehbewegung phasenverschobene Signale, die zur Drehrichtungserkennung notwendig sind.

Da die Signalscheibe in verschiedenen Ausführungen verwendbar ist und dabei beispielsweise nur eine, zwei oder mehr Ausnehmungen am Umfang aufweist, sind jeweils nur zwei Positionen für die Sensoren vorteilhaft. Auf die dritte Position kann je nach Bauart der Signalscheibe verzichtet werden. Vorteilig bei nur wenigen Ausnehmungen am Umfang ist, dass die elektrische Signal-Frequenz auch bei hohen Drehzahlen relativ niedrig ist. Zur verbesserten Winkelauflösung trägt allerdings eine höhere Anzahl von Ausnehmungen bei. Insgesamt sind daher besonders eine Anzahl von 6 oder 8 Ausnehmungen am Umfang vorteilig.

Die Positionen der Sensoren sind derart gewählt und das Elektronikgehäuse 8 ist derart geformt, dass ein vorteilhaftes Pulsmuster erzeugt, bei dem die beiden Signale um elektrisch 90° versetzt sind. Die Sensoren sind dabei im Wesentlichen auf demselben Radius angeordnet.

Die Lüfterhaube ist am axialen Endbereich des Motorgehäuseteils 9 verbunden.

Bei einem weiteren Ausführungsbeispiel ist kein Steckverbinder am Modul vorgesehen, sondern es wird ein Kabel von den Sensoren aus dem Modul herausgeführt bis beispielsweise in den Anschlusskasten des Elektromotors oder zu einer externen Vorrichtung hin.

Bei einem weiteren Ausführungsbeispiel sind bei geeignet ausgeführten Signalscheiben als Positionen der Sensoren derartige gewählt und das Elektronikgehäuse 6 ist derartig geformt, dass die Sensoren zueinander einen Winkel von 90° aufweisen.

Das Elektronikgehäuse 6 ist dicht und in hoher Schutzart ausgeführt. Es vergrößert zwar die Baulänge des Motors, stört aber wenig, weil es am axialen Endbereich angeordnet ist und nicht in radialer Richtung hervorsteht.

Bei anderen erfindungsgemäßen Ausführungsbeispielen ist statt der dünnen Signalscheibe auch eine dickere verwendbar, wobei dann die Ausnehmungen nur als Vertiefungen ausgeführt sind. Alternativ ist die Signalscheibe auch aus Kunststoff ausführbar, wobei statt im Bereich der Materialbereiche metallische Partikel im Kunststoffmaterial vorgesehen sind, im Bereich der Ausnehmungen entweder Kunststoff ohne oder mit weniger metallischen Partikeln oder alternativ statt des Kunststoffs eine Ausnehmung, also Luft. In weiterer Alternative ist die Signalscheibe auch aus einem magnetisierbaren Material herstellbar, wobei die Materialbereiche 1 derart magnetisiert sind, dass in axialer Richtung ein jeweiliger Nordpol detektierbar ist, und wobei die Bereiche 2 derart ausgeführt und magnetisiert sind, dass in axialer Richtung ein jeweiliger Südpol detektierbar ist.

Bei anderen erfindungsgemäßen Ausführungsbeispielen sind die am Steckverbinder herausgebbaren Signale als Inkrementalsignal in HTL, TTL und Sinus-Ausführung zur Verfügung stellbar oder als Bus-Digitalsignal in beispielhafter Schnittstelle wie ASI- oder CAN-Bus.

Bei anderen erfindungsgemäßen Ausführungsbeispielen ist die Signalscheibe metallisch und das Lüfterrad aus Kunststoff.

Die Befestigung der Signalscheibe erfolgt an den Zapfen 20 des Lüfterrades. Die Zapfen 20 sind einstückig mit dem Lüfterrad ausgebildet. Somit sind die Zapfen und entsprechende Ausnehmungen an der Signalscheibe derart ausgeformt, dass in Umfangsrichlung eine formschlüssige Verbindung und in axialer Richtung eine kraftschlüssige Verbindung ausgeführt ist. Zur letztgenannten Verbindung verbreitern sich die Zapfen in axialer Richtung auf den Motor hin und ermöglichen somit schon durch bloßes Aufstecken der Signalscheibe eine stabile und feste Verbindung.

## Patentansprüche

1. Elektromotor,
umfassend einen Lüfter mit Lüfterrad, das von einer Lüfterhaube (5) zumindest teilweise umgeben ist, wobei
**das Lüfterrad (4) mit einer Rotorwelle des Elektromotors verbunden ist,**
**wobei** das Lüfterrad (4) an seinem einen axialen Endbereich mit einer Signalscheibe verbunden ist, die mit Sensoren (30) eines Moduls zusammenwirken, das an der Lüfterhaube (5) vorgesehen ist,
wobei die Sensoren (30) axial hinter der Signalscheibe angeordnet sind,
**wobei die Signalscheibe aus metallischem Material, insbesondere Blech, gefertigt ist oder zumindest metallische Partikel umfasst,**
**dadurch gekennzeichnet, dass**
**die Signalscheibe In axialer Richtung kraftschlüssig und zusätzlich in Umfangsrichtung formschlüssig mit dem Lüfterrad (4) verbunden ist,**
**wobei das Modul Sensoren (30) und ein mit der Lüfterhaube (5) lösbar verbindbares Elektronikgehäuse (6) aufweist,**
**wobei das Modul drei Positionen zur Aufnahme der Sensoren (30) umfasst,**
**wobei die Sensoren (30) nur an zwei der drei Positionen vorgesehen sind.**

2. Elektromotor nach mindestens einem der vorangegangenen Ansprüche,
**dadurch gekennzeichnet, dass**
das Lüfterrad (4) aus Kunststoff gefertigt ist, insbesondere als Spritzgussteil.

3. Elektromotor nach mindestens einem der vorangegangenen Ansprüche,
**dadurch gekennzeichnet, dass**
der vom Lüfter erzeugte Kühlluftstrom die Wärmeabfuhr des Elektromotors an die Umgebung verbessert.

4. Elektromotor nach mindestens einem der vorangegangenen Ansprüche,
**dadurch gekennzeichnet, dass**
die Sensoren (30) in Umfangsrichtung mit einem derartigen Versatz angeordnet sind, so dass ein vorteilhaftes Pulsmuster erzeugt wird, bei dem die beiden Signale um elektrisch 90° versetzt sind.

5. Elektromotor nach mindestens einem der vorangegangenen Ansprüche,
**dadurch gekennzeichnet, dass**
die Sensoren (30) in Umfangsrichtung mit einem Versatz von jeweils 90° angeordnet sind.

6. Elektromotor nach mindestens einem der vorangegangenen Ansprüche,
**dadurch gekennzeichnet, dass**
das Modul ein Steckverbinderteil umfasst.

7. Elektromotor nach mindestens einem der vorangegangenen Ansprüche,
**dadurch gekennzeichnet, dass**
das Modul als Busteilnehmer ausgeführt ist.

8. Elektromotor nach mindestens einem der vorangegangenen Ansprüche,
**dadurch gekennzeichnet, dass**
die Sensoren (30) mit einem derart großen Luftspalt arbeiten, so dass eine Justierung des Sensors (30) beim Zusammenbau des Motors entfällt.

9. Elektromotor nach mindestens einem der vorangegangenen Ansprüche,
**dadurch gekennzeichnet, dass**
der Arbeitsbereich der Sensoren (30) größer ist als die Fertigungstoleranzen der Lüfterhaube (5) und des Lüfterrades.

## Claims

1. Electric motor,
comprising a fan with a fan wheel which is at least partially surrounded by a fan shroud (5), wherein
the fan wheel (4) is connected to a rotor shaft of the electric motor,
wherein the fan wheel (4) is connected at its axial end region to a signal disc which cooperates with sensors (30) of a module which is provided on the fan shroud (5),
wherein the sensors (30) are arranged axially behind the signal disc,
wherein the signal disc is produced from metallic material, in particular sheet metal, or comprises at least metallic particles,
**characterised in that**
the signal disc is connected to the fan wheel (4) with a force fit in the axial direction and additionally with a form fit in the circumferential direction,
wherein the module has sensors (30) and an electronic housing (6) detachably connectable to the fan shroud (5),
wherein the module comprises three positions for receiving the sensors (30),
wherein the sensors (30) are only provided at two of the three positions.

2. Electric motor according to at least one of the preceding claims,
**characterised in that**
the fan wheel (4) is produced from plastic, in particular as an injection-moulded part.

3. Electric motor according to at least one of the preceding claims,
**characterised in that**
the cooling air flow generated by the fan improves the heat removal from the electric motor to the environment.

4. Electric motor according to at least one of the preceding claims,
**characterised in that**
the sensors (30) are arranged in the circumferential direction with such an offset that an advantageous pulse pattern is generated, in which the two signals are electrically offset by 90°.

5. Electric motor according to at least one of the preceding claims,
**characterised in that**
the sensors (30) are arranged with an offset of in each case 90° in the circumferential direction.

6. Electric motor according to at least one of the preceding claims,
**characterised in that**
the module comprises a plug connector part.

7. Electric motor according to at least one of the preceding claims,
**characterised in that**
the module is embodied as a bus node.

8. Electric motor according to at least one of the preceding claims,
**characterised in that**
the sensors (30) work with an air gap of such a size that adjustment of the sensor (30) during assembly of the motor is not necessary.

9. Electric motor according to at least one of the preceding claims,
**characterised in that**
the working range of the sensors (30) is greater than the production tolerances of the fan wheel (5) and of the fan shroud.

## Revendications

1. Moteur électrique
comprenant un ventilateur muni d'une roue entourée, au moins en partie, par un capot (5) dudit ventilateur, sachant que
la roue (4) du ventilateur est reliée à un arbre rotorique dudit moteur électrique,
ladite roue (4) du ventilateur étant reliée, par l'une de ses régions extrêmes axiales, à un disque de signalisation qui coopère avec des capteurs (30) d'un module prévu sur ledit capot (5) du ventilateur,
lesdits capteurs (30) étant placés axialement derrière ledit disque de signalisation,
ledit disque de signalisation étant fabriqué en un matériau métallique, notamment en de la tôle, ou renfermant au moins des particules métalliques,
**caractérisé par le fait que**
le disque de signalisation est relié à la roue (4) du ventilateur par engagement positif dans le sens axial et, additionnellement, par complémentarité de formes dans le sens périphérique,
le module comportant des capteurs (30) et un boîtier électronique (6) pouvant être relié amoviblement au capot (5) du ventilateur,
ledit module comprenant trois emplacements dévolus à la réception des capteurs (30), lesdits capteurs (30) étant prévus uniquement en deux, parmi les trois emplacements.

2. Moteur électrique selon au moins la revendication précédente, **caractérisé par le fait que**
la roue (4) du ventilateur est fabriquée en matière plastique, notamment en tant que pièce moulée par injection.

3. Moteur électrique selon au moins l'une des revendications précédentes, **caractérisé par le fait que**
le courant d'air de refroidissement, engendré par le ventilateur, améliore la dissipation de chaleur dudit moteur électrique vers l'espace environnant.

4. Moteur électrique selon au moins l'une des revendications précédentes, **caractérisé par le fait que**
les capteurs (30) sont disposés, dans le sens périphérique, avec un décalage propre à engendrer un profil d'impulsions avantageux en présence duquel les deux signaux sont décalés électriquement de 90°.

5. Moteur électrique selon au moins l'une des revendications précédentes, **caractérisé par le fait que**
les capteurs (30) sont disposés, dans le sens périphérique, avec un décalage respectif de 90°.

6. Moteur électrique selon au moins l'une des revendications précédentes, **caractérisé par le fait que**
le module comprend une pièce de connexion enfichable.

7. Moteur électrique selon au moins l'une des revendications précédentes, **caractérisé par le fait que**
le module est réalisé sous la forme d'un abonné à une barre omnibus.

8. Moteur électrique selon au moins l'une des revendications précédentes, **caractérisé par le fait que**
les capteurs (30) fonctionnent avec un entrefer d'un dimensionnement propre à dispenser d'un réglage du capteur (30) au stade de l'assemblage dudit moteur.

9. Moteur électrique selon au moins l'une des revendications précédentes, **caractérisé par le fait que**
la plage opérante des capteurs (30) est plus grande que les tolérances de fabrication du capot (5) du ventilateur et de la roue dudit ventilateur.
